# EUROPEAN PATENT APPLICATION

(11) **EP 4 462 334 A1**
(43) Date of publication of application: **13.11.2024**
(21) Application number: 24168731.8
(22) Date of filing: 05.04.2024
(51) Int. Cl.: G06Q 20/22, G06Q 20/34, G06Q 20/40

(54) **METHOD AND APPARATUS FOR HANDLING OF REFUNDS IN ASSOCIATION WITH A FUNCTIONALLY DYNAMIC CARD**

(30) Priority: 08.05.2023 US 202318144383
(71) Applicant: Affirm, Inc., San Francisco, CA 94108 (US)
(72) Inventor: QIAN, Joshua, Sea Girt (US); APPAVOO, Dinesh, San Francisco (US); MALIK, Maira A., Oakland (US); NEKKANTI, Divya, San Francisco (US)
(74) Representative: Piotrowicz, Pawel Jan Andrzej

(57) **Abstract**

A method for processing a transaction including a product return may include receiving an indication of the transaction associated with a purchase of a product from a merchant via a value card of a customer, where the value card is usable to support multiple transaction types including a debit purchase or a credit purchase, and receiving an indication of selected transaction type indicating whether the transaction is to be treated as an instance of the debit purchase or the credit purchase. The method may further include directing funds to the merchant in an amount of the transaction, selectively processing the transaction with respect to the customer based on the selected transaction type, storing a transaction record indicating the amount of the transaction and the selected transaction type, receiving a product return indication, retrieving the transaction record to determine the amount of the transaction and the selected transaction type, determining a refund path based on the selected transaction type, and processing the product return based on the refund path determined.

## Description

### TECHNICAL FIELD

Example embodiments generally relate to financial industry technologies and, in particular, relate to apparatuses, systems, and methods for facilitating commerce and for enabling customers to make purchases using a functionally dynamic card, but also manage product returns and refunds with respect to those purchases.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), there is not much flexibility at all after the decision is made as to which option to select.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Installment loans, or buy now, pay later financing, have become a popular tool in relation to addressing the issues noted above. However, even this popular tool can have a rigid process for employment that is undertaken at the outset. What is therefore desirable is a means by which to employ technology to make purchases via a single mechanism that offers the flexibility to change the payment mechanisms used to suit the customers' desires or situation at any given time. To accomplish this, one might consider a value card that offers such flexibility. However, even with such a card, how to process a product return and manage the refund associated therewith would still remain in question.

### BRIEF SUMMARY OF SOME EXAMPLES

Accordingly, some example embodiments may enable the provision of technical means by which to give customers the ability to not only use a value card to switch between payment methods for products, but to have the refund that comes from a product return adapted to be applied to the particular method of payment or financing that was used to make the original purchase. Such power may enable customers to have access to credit with confidence and convenience via an instrument such as a value card (e.g., a debit or credit card) whether virtual or physical.

In an example embodiment, a method for processing a transaction including a product return may include receiving an indication of the transaction associated with a purchase of a product from a merchant via a value card of a customer, where the value card is usable to support multiple transaction types including a debit purchase or a credit purchase, and receiving an indication of selected transaction type indicating whether the transaction is to be treated as an instance of the debit purchase or the credit purchase. The method may further include directing funds to the merchant in an amount of the transaction, selectively processing the transaction with respect to the customer based on the selected transaction type, storing a transaction record indicating the amount of the transaction and the selected transaction type, receiving a product return indication, retrieving the transaction record to determine the amount of the transaction and the selected transaction type, determining a refund path based on the selected transaction type, and processing the product return based on the refund path determined.

In another example embodiment, an apparatus for processing a transaction including a product return be provided. The apparatus may include processing circuitry configured for receiving an indication of the transaction associated with a purchase of a product from a merchant via a value card of a customer, where the value card is usable to support multiple transaction types including a debit purchase or a credit purchase, and receiving an indication of selected transaction type indicating whether the transaction is to be treated as an instance of the debit purchase or the credit purchase. The processing circuitry may be further configured for directing funds to the merchant in an amount of the transaction, selectively processing the transaction with respect to the customer based on the selected transaction type, storing a transaction record indicating the amount of the transaction and the selected transaction type, receiving a product return indication, retrieving the transaction record to determine the amount of the transaction and the selected transaction type, determining a refund path based on the selected transaction type, and processing the product return based on the refund path determined.

In yet another example embodiment, a method of handling a product return may be provided. The method may include receiving a product return indication and corresponding refund amount from a merchant for a product purchased by a customer from the merchant, determining if a match exists between the refund amount and purchase amount for a transaction, retrieving a transaction record for the transaction to determine a selected transaction type of the transaction, determining a refund path based on the selected transaction type, and processing the product return based on the refund path determined.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a selective financing and payment platform according to an example embodiment;
FIG. 2 illustrates a functional block diagram of an apparatus for defining a facilitation agent according to an example embodiment;
FIG. 3 illustrates a block diagram showing control flow for account setup in accordance with an example embodiment;
FIG. 4 illustrates a block diagram for control flow associated with initial transaction handling in accordance with an example embodiment;
FIG. 5 illustrates a block diagram of control flow for handling a refund associated with a product return in accordance with an example embodiment;
FIG. 6 illustrates a customer selection screen indicating that a refund has been received in a given amount to request customer instructions for handling the refund in accordance with an example embodiment;
FIG. 7 shows a listing of loans with an identified merchant for customer selection in accordance with an example embodiment;
FIG. 8 illustrates a customer payment schedule for a financed transaction in accordance with an example embodiment;
FIG. 9 illustrates an updated payment schedule based on receiving a full product refund before any payment is made in accordance with an example embodiment;
FIG. 10 illustrates an updated payment schedule based on receiving a partial product refund before any payment is made in accordance with an example embodiment;
FIG. 11 illustrates a customer payment schedule for a financed transaction with one payment having already been made in accordance with an example embodiment;
FIG. 12 illustrates an updated payment schedule based on receiving a full product refund after the first payment is made in accordance with an example embodiment;
FIG. 13 illustrates a transaction listing for five transactions with a payment schedule for two of the transactions that were financed in accordance with an example embodiment;
FIG. 14 illustrates a chart showing options that may be presented to the customer for selection for application of the refund since no match is possible in accordance with an example embodiment;
FIG. 15 illustrates an update to the transaction listing of FIG. 13 based on customer selections in accordance with an example embodiment; and
FIG. 16 illustrates a block diagram of a method for managing a customer transaction including a product return in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. As such, the data processing platform may be embodied as a selective financing and payment platform (i.e., SFP platform) that connects customers and merchants (or vendors) to banks, payment services, and a transaction facilitator within the financial industry. By enabling data between the players on or members of the platform to be shared, and by further providing customers with tools for using the platform to manage (or plan) financing of individual transactions even before the transactions occur, customers may have increased flexibility for managing their funds in a way that prevents over-extension, while still maximizing their access to the goods and services they desire or need at any given time. Moreover, the platform may be employed under the management of the facilitator to control the usage of data on mutually agreeable terms for all participants who access the platform. Accordingly, a commercial framework can be provided by a technical platform designed to connect customers with access to financial support to effect transactions in advance or in real time. However, example embodiments further enable behavior after the transaction to be considered with respect to a fully satisfying customer experience in relation to product return and refund activities. In other words, instead of merely initiating a platform for supporting installment loan (or other financing options) decisions before or at the time of the transactions, example embodiments provide customers with technical means by which to obtain financing for a particular transaction, and then have the handling of any product return activity be associated with the particular transaction so that the refund can be handled with respect to the particular transaction when the transaction is supported by a functionally dynamic or flexible value card. In this regard, the normal situation is that whether the transaction was funded by a loan or by a debit transaction when the value card is used to carry out the transaction, the refund would simply result in money being deposited in the customer's linked account. This means that if a loan was established, the loan is not affected by the refund, and the customer must take additional action to repay the loan. Example embodiments employ technology to not only detect situations where proactive assistance to the customer can be taken, but to automatically do so in order to repay loans immediately upon detection of conditions for doing so to avoid any need for further customer inconvenience, but also to avoid any further cost to the customer (e.g., associated with interest or other financing charges). This stands in contrast to today's paradigm in which a rigid and non-discriminating refund process leads to more work, and potentially more cost, for the customer. The creation of one platform, managed by the facilitator, for the interaction of multiple parties to enable a determination of whether a refund can/should be used to repay and modify or even cancel a loan provides a flexible and yet cohesive experience for customers that maximizes responsible access to financial freedom and satisfaction.

Within this context, a transaction is considered "settled" when all parties involved in the transaction have received any payments or funds that may be owed to them. Thus, if cash is paid to the merchant by the customer, the transaction is immediately settled. For a credit card purchase, the transaction may be settled when the merchant has received funds from a bank associated with the credit card, and the customer has paid the bank accordingly so that the bank has also received the funds it advanced on behalf of the customer to the merchant. For a debit card purchase, the transaction may be settled when the merchant has received funds from a bank associated with the debit card, and the bank has debited the customer's account accordingly so that the bank has also received the funds it advanced on behalf of the customer to the merchant. Example embodiments may allow a transaction involving a value card to proceed as if a normal credit or debit card purchase is being conducted as far as the merchant is concerned, even though the customer may elect for a loan or financing option (e.g., an installment loan or a buy now, pay later loan) to be associated with the transaction to fund it. In this regard, the facilitator interacts with the merchant on behalf of the customer the same way regardless of whether there is a financing option employed on the back end. However, the facilitator will record details of the transaction that will hopefully enable the facilitator to determine, if a product return later occurs, which transaction is specifically associated with the product return so that the refund associated with the product return can be processed based on the payment method employed. In other words, example embodiments may enable the facilitator to process the product return in a way that is dictated by, and tailored to, the particular payment method employed.

Example embodiments not only provide the SFP platform, but also provide various enabling technologies that may facilitate operation of the SFP platform itself or of modules that may interact with the SFP platform. Example embodiments may also provide for enhancement of functionalities associated with the environment that is created by the SFP platform. The SFP platform may provide a mechanism by which to enhance commerce in a responsible way that is both empathetic and empowering to customers.

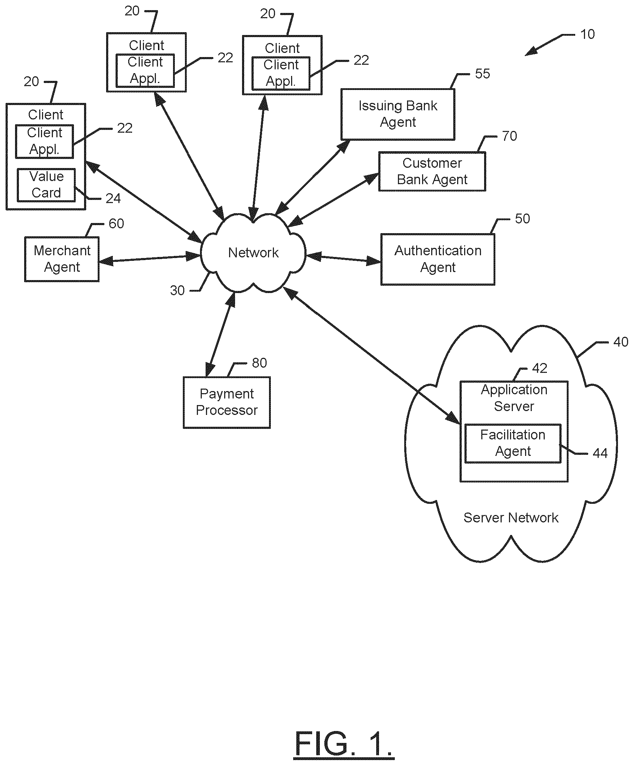

An example embodiment will now be described in reference to FIG. 1, which illustrates an example system in which an example embodiment may be employed. As shown in FIG. 1, a system comprising an SFP platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system. Furthermore, in some cases, some embodiments may be practiced on a single client without any connection to the system.

The clients 20 may, in some cases, each be associated with a single individual or customer. However, in some embodiments, one or more of the clients 20 may be associated with an organization (e.g., a company) or group of individuals (e.g., a family unit). In general, the clients 20 may be referred to as members of the environment or community associated with the SFP platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 42), and/or a database server, which together may form respective elements of a server network 40. Although the application server 42 and the database server are each referred to as "servers," this does not necessarily imply that they are embodied on separate servers or devices. As such, for example, a single server or device may include both entities and the database server could merely be represented by a database or group of databases physically located on the same server or device as the application server 42. The application server 42 and the database server may each include hardware and/or software for configuring the application server 42 and the database server, respectively, to perform various functions. As such, for example, the application server 42 may include processing circuitry or logic and memory enabling the application server 42 to access and/or execute stored computer readable instructions for performing various functions. In an example embodiment, one function that may be provided by the application server 42 may be the provision of access to information and/or services related to the SFP platform 10, and more particularly relating to facilitating transactions where the details of setting the transaction will be determined after the transaction. For example, the application server 42 may be configured to provide for storage of information descriptive of events or activities associated with the SFP platform 10 and the execution of a financial transaction on behalf of a customer in real time, while delaying the customers decision on how to settle the transaction to a later time. In some cases, data and/or services may be exchanged amongst members, where specific needs or desires of the members are aligned with respect to playing their respective roles in connection with conducting a financial transaction, and enabling the settlement method for the transaction to be determined at a later time.

In some embodiments, for example, the application server 42 may therefore include an instance of a facilitation agent 44 comprising stored instructions for handling activities associated with practicing example embodiments as described herein. The facilitation agent 44 may be a technical device, component or module affiliated with the facilitator of the functioning of the SFP platform 10. Thus, the facilitation agent 44 may operate under control of the facilitator to be a technical means by which to carry out activities under direction of the facilitator or employees thereof. As such, in some embodiments, the clients 20 may access the SFP platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 42 (e.g., via download over the network 30) to one or more of the clients 20 to enable recipient clients to instantiate an instance of the client application 22 for local operation such that the facilitation agent 44 may be a distributor of software enabling members or parties to participate in operation of the SFP platform 10. Alternatively, another distributor of the software may provide the client 20 with the client application 22, and the facilitation agent 44 may communicate with the client 20 (via the client application 22) after such download.

In an example embodiment, the client application 22 and/or software located at the facilitation agent 44 may therefore include application programming interfaces (APIs) and other web interfaces to enable the client 20 to conduct business via the SFP platform 10. The client application 22 may include instructions for generation of a series of control consoles or web pages including a landing page, onboarding services, activity feed, account settings (e.g., user profile information), transaction management services, payment management services and the like in cooperation with a service application that may be executed at the facilitation agent 44. Thus, for example, the client application 22 may enable the customer to review monthly statements, request a value card 24 (e.g., a physical or virtual credit or debit card), turn on or off a virtual or digital card, access or adjust information associated with the customer account, initiate a transaction, manage a product return, or receive help or other information. Budgeting tools and other useful information and other useful tools for managing the finances of the customer may also be available via the client application 22 in some cases.

In an example embodiment, the application server 42 may include or have access to memory (e.g., internal memory or the database server) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal (e.g., a computer including a user interface) via which individual operators or managers of the entity associated with the facilitation agent may interact with, configure or otherwise maintain the SFP platform 10 and/or the facilitation agent 44.

As such, the environment of FIG. 1 illustrates an example in which provision of content and information associated with the financial industry (e.g., including at least some data provided to/from customers and/or merchants in real-time) may be accomplished by a particular entity (namely the facilitation agent 44 residing at the application server 42). Thus, the facilitation agent 44 may be configured to handle provision of content and information associated with tasks that are associated only with the SFP platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

The SFP platform 10 may also operate in cooperation with a bank authentication agent 50, an issuing bank agent 55, a merchant agent 60, a customer bank agent 70, and a payment processor 80. The facilitation agent 44 may be configured to interact with, or otherwise facilitate interactions between, each of the bank authentication agent 50, the issuing bank agent 55, the merchant agent 60, the customer bank agent 70, and the payment processor 80 in order to carry out example embodiments as described herein. Thus, each of the bank authentication agent 50, the issuing bank agent 55, the merchant agent 60, the customer bank agent 70, and the payment processor 80 should be understood to be a computer, server, smart phone, or other technical component or module associated with a respective party (e.g., an authenticating bank, issuing bank, a merchant, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the customer or the customer bank. The issuing bank may be contracted with or otherwise have a pre-existing relationship with the facilitation agent 44 (and entity associated therewith) that enables the facilitation agent 44 to facilitate transactions on behalf of the customer when certain conditions (agreed upon in advance by the entity associated with the facilitation agent 44 and the issuing bank) are met associated with a transaction undertaken (or attempted) by the customer via the client 20 and client application 22. For example, the issuing bank may be the issuer of the value card 24 (e.g., debit or credit card) on behalf of the facilitation agent 44 and be responsible for directly paying the merchants and merchants during a transaction initiated by the customer via the value card 24.

The bank authenticator may be an agent or financial service provider capable of granting the facilitation agent 44 access to the customer bank to view account balances and credentials. The balances and credentials may be used or relied upon to pull or push funds from or to the customer bank using the payment processor 80. Thus, for example, the bank authenicator may utilize its own software, application programming interfaces (APIs) or the like that define an infrastructure or intermediary platform to connect a customer's bank account with the facilitation agent 44.

The customer bank may be a bank at which the customer (i.e., associated with one of the clients 20) deposits money in a bank account such as a savings account or a checking account. In an example embodiment, the customer may subscribe or register to a service or request a value card 24 (e.g., a credit card, debit card or other virtual or digital card) from the facilitation agent 44 to enroll the customer as a member of the SFP platform 10. During subscription or registration, the customer may be prompted (via the client 20 and client application 22) by the facilitation agent 44 to provide account details identifying the savings account or checking account (i.e., a customer account) at the customer bank. The customer may, by registering or subscribing, further authorize the facilitation agent 44 to conduct specific activities related to the customer account when corresponding conditions are met, which may be facilitated by one of or a combination of the bank authenticator and the issuing bank as described above. The activities may include checking account status (i.e., checking a current balance of funds deposited in the customer account) and/or authorizing withdrawal of funds from the customer account by the payment processor 80 in order to settle a transaction or make payments to the facilitation agent 44.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online.

The customer bank agent 70 may change for each respective one of the clients 20 (and therefore for each respective customer). Similarly, the merchant agent 60 may change for each respective transaction since different merchants may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all customers' banks can be accommodated. For example, if the customer bank was not serviced by a first bank authentication agent, the facilitation agent 44 is configured to swap in a second bank authentication agent that would allow for servicing of the customer bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the SFP platform 10 may operate to enable the customer associated with a given one of the clients 20 to make a purchase (e.g., in real time) from a merchant associated with the merchant agent 60. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the SFP platform 10. The facilitation agent 44 may prompt the client 20 to provide account details associated with the customer bank agent 70 and may provide terms and conditions (electronically or via mail or other communication means) that the customer may accept to establish a user profile and user account with the facilitation agent 44. In some cases, the customer may be provided with a value card 24 (e.g., a debit card or credit card) or other physical implement that can be used to initiate transactions with merchants. As noted above, the card may be issued by the issuing bank. The card may be associated with the user account, and may provide identifying information needed to initiate operation of the SFP platform 10 (and the facilitation agent 44) as described herein when the customer uses the card to make a purchase with a merchant. The card may be physically presented for such purpose and magnetic strip, chip or other technologies may be used in connection with initiating the transaction. Otherwise, the card number provided on the card may be unique to the user account, and may be provided to the merchant to initiate the transaction. Finally, as an additional or alternative way to initiate a transaction, the card may be virtual and may exist in a mobile wallet or other smartphone context for initiating transactions online. In such a context, the client application 22 may also or alternatively be the means by which the transaction is initiated or handled. Thus, it should be appreciated that the client application 22 could be used to set up the user account and user profile and/or to conduct individual transactions.

During establishment of the user account, the customer may provide an identification of the customer bank associated with the customer bank agent 70, and may also provide details for the savings or checking account that the customer maintains at the customer bank. The customer may also authorize the facilitation agent 44 to make real time (or anytime) checks on account status (e.g., account balance) or to make periodic routine checks of the same. Thus, for example, for each transaction, the facilitation agent 44 may be enabled to check the account balance of the customer. Alternatively or additionally, the facilitation agent 44 may make routine checks or snapshot looks at the account balance. For example, a check may be made every day at a certain time, every two or three days, or at other standard or random intervals. The account status of the customer bank may be used by the facilitation agent 44 in facilitating payment transactions, such as determining whether a debit transaction can be facilitated, or whether a loan can be granted to support the transaction(s).

The issuing bank may have an agreement or relationship with the entity associated with the facilitation agent 44 that enables the facilitation agent 44 to engage the issuing bank to extend funds to a merchant or vendor on behalf of the customer in response to instruction from the facilitation agent. The facilitation agent 44 may therefore coordinate communications and funds transferring between members or parties of the SFP platform 10 to facilitate payment transactions that can be handled in ways selected specifically by the customer. In this regard, the customer may approach the merchant (physically or virtually) in order to initiate a transaction. The card (virtual or physical) may be provided for payment, and the corresponding indication of a pending transaction may be communicated (e.g., via the SFP platform 10 by the merchant agent 60 and/or the client 20 via the network 30). The transaction may be mapped to a previously planned purchase for which a loan is approved and flow of funds reserved for the loan may be managed without any further need for customer interaction. The communication and activities that ensue from the basic description above will now be described greater detail below.

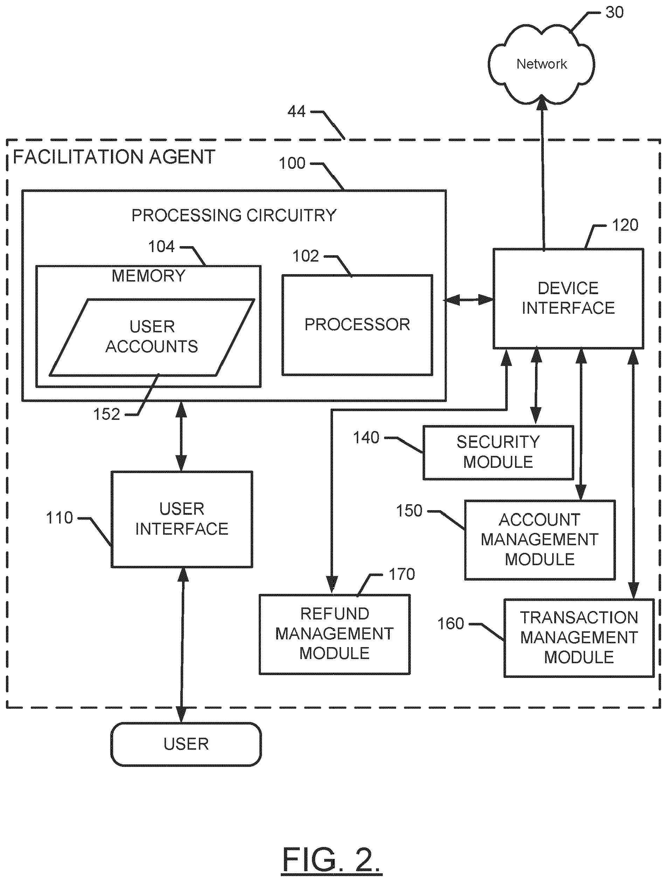

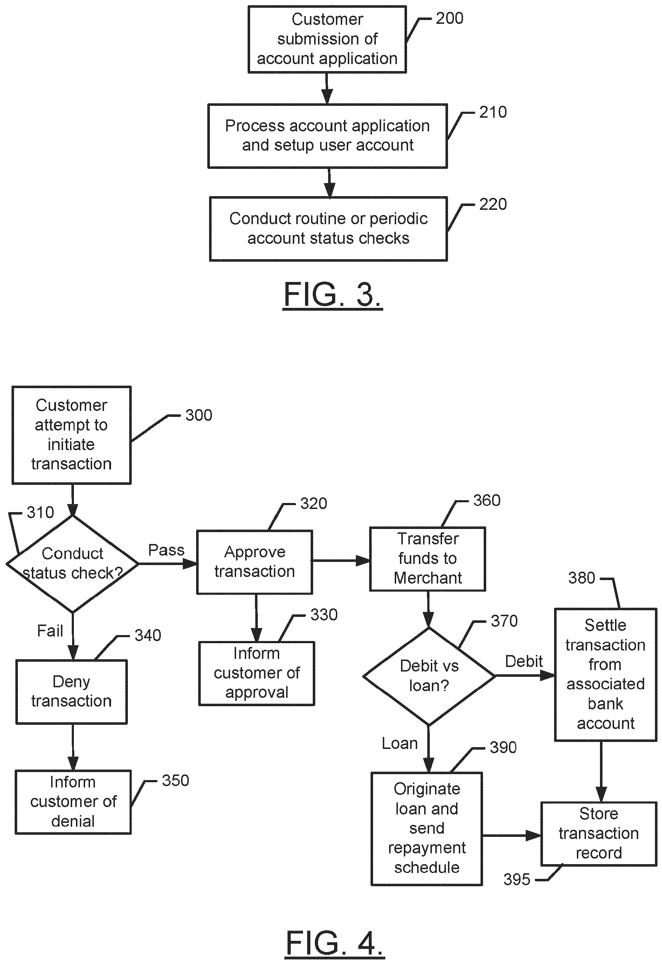

Regardless of how the transactions are initiated, the SFP platform 10 of FIG. 1 may be used before, during and after the time of the transaction in order to enable the facilitation agent 44 to set up the user account, make determinations necessary to approve a loan in association with a planned transaction prior to its initiation, conduct the transaction in real time responsive to initiation of the transaction, facilitate flow of funds and issuance of the loan responsive to mapping the transaction to the planned transaction and corresponding loan, and managing the flow of funds accordingly at the appropriate time. The SFP platform 10 may also support product return and refund activities as described in greater detail below. Each of these activities may have its own respective timing and communications that are facilitated by the facilitation agent 44 and FIGS. 3-7 illustrate example control flows and interface screens associated with various scenarios. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 42 of FIG. 1)). Alternatively, embodiments may be employed on a combination of devices (e.g., in distributed fashion on a device (e.g., a computer) or a variety of other devices/computers that are networked together). Accordingly, some example embodiments may be embodied wholly at a single device (e.g., the application server 42) or by devices in a client/server relationship (e.g., the application server 42 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the SFP platform hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located (e.g., at the user interface of the client 20).

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer or user accounts (and a corresponding user profile), and the coordination of communication and fund transfers to support the operations of the SFP platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein. However, as noted above, the modules described herein may not be separate modules or modular in that respect. Thus, functions associated with each module described herein may be distributed or consolidated in part or in whole in various example embodiments.

As shown in FIG. 2, the facilitation agent 44 may include a security module 140. The security module 140 may be configured to enforce data security and data/user access control. In some example embodiments, the security module 140 may employ authentication and authorization tools to manage the provision of access to customers or other SFP platform 10 members or entities wishing to access the SFP platform 10. The security module 140 may operate on queries or communications in real time as such queries or communications are occurring.

The facilitation agent 44 may also include an account management module 150. The account management module 150 may be configured to manage storage of and access to information about individual customers including user accounts 152 and corresponding user profiles, which may include descriptive information about settings, approvals, or management paradigms that apply to specific merchants or transactions for each instance of the user accounts 152. The user accounts 152 may include details of the checking or savings account at the customer bank for each customer and respective client 20, and authorizations to check account status for each.

In an example embodiment, the account management module 150 may handle communications with the clients 20 associated with setting up the user accounts 152. The user profile associated with each respective one of the user accounts 152 may include user preferences, entitlements, or authorizations (e.g., credit limits) with respect to the amount of debt each user is enabled to take on either in aggregate, on a transaction by transaction basis, on a merchant basis, or with respect to specific types of goods or services. Each transaction may, for example, be authorized only if rules associated with either user preferences or policies that the customer has reviewed and accepted as terms of service are met. Those rules may be established during account setup and recorded for each of the user accounts 152 by the account management module 150.

In an example embodiment, the facilitation agent 44 may also include a transaction management module 160. The transaction management module 160 may coordinate or facilitate all communications with the parties to the SFP platform 10 in association with each transaction that is initiated by a customer, and each transaction that is planned by a customer in advance. As such, the transaction management module 160 may be configured to handle communications with the client 20, the merchant agent 60, the customer bank agent 70, the bank authentication agent 50, the issuing bank agent 55, and the payment processor 80 as described in greater detail below in response to and prior to handling a transaction. In the responsive case, for example, the transaction management module may receive an indication of a pending transaction and, within a predetermined period of time (e.g., 3 seconds) make a determination as to whether to authorize the transaction or deny the transaction. The decision to authorize or deny the transaction may be made based on either a real time and concurrent check on the account status (e.g., account balance) of the checking or savings account identified in the user account 152, or based on the last snapshot of the account status (assuming the snapshot was taken within a predetermined period of time (e.g., 3 days or less). If the account status is satisfactory, the transaction may be authorized, and further communications and coordination details described below may be handled by the transaction management module 160. The transaction management module 160 may also be configured to, assuming certain criteria are met, provide the customer with options for either immediate settlement relative to the transaction, or whether to convert the transaction to an installment loan with predetermined (or customer selected) payment terms.

In some embodiments, the facilitation agent 44 may further include a refund management module 170. The refund management module 170 may be configured to provide generation of appropriate messages, control consoles or user interface displays (e.g., at the client 20) by provision of corresponding instructions to do so for the control of various activities associated with managing a return and its associated refund. In this regard, in some cases the customer may initially engage with the refund management module 170 to proactively report a product return. The customer may have recently completed the product return, or may be planning to do so shortly, and may wish to arrange for the handling of the corresponding refund. In such cases, the refund management module 170 may manage the interface tools to enable the customer to set up the handling of the refund money. However, in other cases, the customer may not necessarily initiate the refund activity, and the refund money may simply show up at the facilitator in response to the product return. In such cases, the refund management module 170 may include programming to automatically process the refund money.

In some embodiments, in response to the receipt of refund money from a merchant, the refund management module 170 may access stored information regarding prior transactions that the customer has conducted recently with the merchant to see if any of the transactions appear to match the refund. For example, if the refund amount is $200 and there is only one transaction for $200 (either alone or among other transactions for different monetary values), it may be clear that there is a merchant match and a refund amount match indicating receipt of a full refund from the merchant for the amount of the transaction. The refund management module 170 may then determine the type of transaction that was conducted (i.e., the payment option selected for the transaction), and may process the refund money according to a refund path that is appropriate to that type of transaction or payment option. Further examples of scenarios, and the programming of the refund management module 170 to support processing each respective one of the scenarios are explained in greater detail below.

FIG. 3 illustrates a block diagram of a communication paradigm that is achievable using an example embodiment for setting up a user account. Referring to FIG. 3, a client (e.g., one of the clients 20 of FIG. 1) may make an account application at operation 200. The account application may be submitted to the facilitation agent 44 via the client application 22 and interface with a website or smart phone application for account setup. The account application may include an identification of the customer (or user) and information establishing a confirmation of employment or monthly income for the customer. The account application may also or alternatively provide account details for linked account (e.g., a bank account such as the savings account and/or checking account that will serve as the primary account from which funds for repaying transactions are extracted). The account application may also include permissions, acknowledgements and any other required communications to authorize setup of the user account 152. At operation 210, the facilitation agent 44 may process the account application and setup the user account incorporating a user profile for the user account. As noted above, the user account may include identifying information for the checking or savings account of the customer. Thereafter, at operation 220, the facilitation agent 44 may routinely or periodically check the checking or savings account to determine account status and may retain such information for transaction processing as described herein. Periodic checks may occur with a selected periodicity and each check may return a snapshot view of the account status at the corresponding time. Routine checks may be initiated responsive to specific activities such as initiation of a transaction. As noted above, the account management module 150 may handle the processes of the facilitation agent 44 that are covered by the example of FIG. 3.

FIG. 4 is a block diagram of control flow associated with a customer executing a transaction at the point of sale (or online). As shown in FIG. 2, the initial operation of the customer attempting to initiate a transaction with a merchant may occur at operation 300. The customer may physically present the value card (e.g., similar to presentation of a debit card or credit card), or remotely present the value card or otherwise provide card number information if the card is not physically present. Thereafter, the facilitation agent 44 may conduct a status check (e.g., check the account status in real time or based on the last snapshot view) to determine eligibility of the transaction within a predetermined period of time (e.g., about 3 seconds) at operation 310. If the status check passes (e.g., indicating that the checking or savings account has a balance sufficient to cover the transaction), the facilitation agent 44 may approve the transaction and the merchant may receive an indication that the transaction has been approved at operation 320. The merchant may put an authorized hold on funds associated with the amount of the transaction at the authenticating bank. The customer may also receive (e.g., via the client application 22) a push message to indicate that the transaction was approved at operation 330. If instead, the status check does not pass, then the facilitation agent 44 may deny the transaction and the merchant may receive an indication that the transaction has been denied at operation 340. The customer may also receive (e.g., via the client application 22) a push message to indicate that the transaction was denied at operation 350.

Returning to the approval path, after transaction approval at operation 320, the facilitator may arrange (e.g., via the issuing bank agent 55 of FIG. 1) for the funds corresponding to the amount of the transaction to be transferred to the merchant at operation 360. The actions thereafter may depend on whether the transaction is to be processed (e.g., based on customer election or a default setting applicable at operation 300) as a debit transaction or a financed transaction (e.g., a loan) at operation 370. If the transaction is a debit transaction, the transaction may be settled by withdrawing the amount of the transaction from an associated (or linked) bank account of the customer at operation 380. If the transaction is a loan transaction, the loan may be originated and a repayment schedule may be communicated to the customer at operation 390. In either case, details of the transaction may be stored in a transaction record at operation 395.

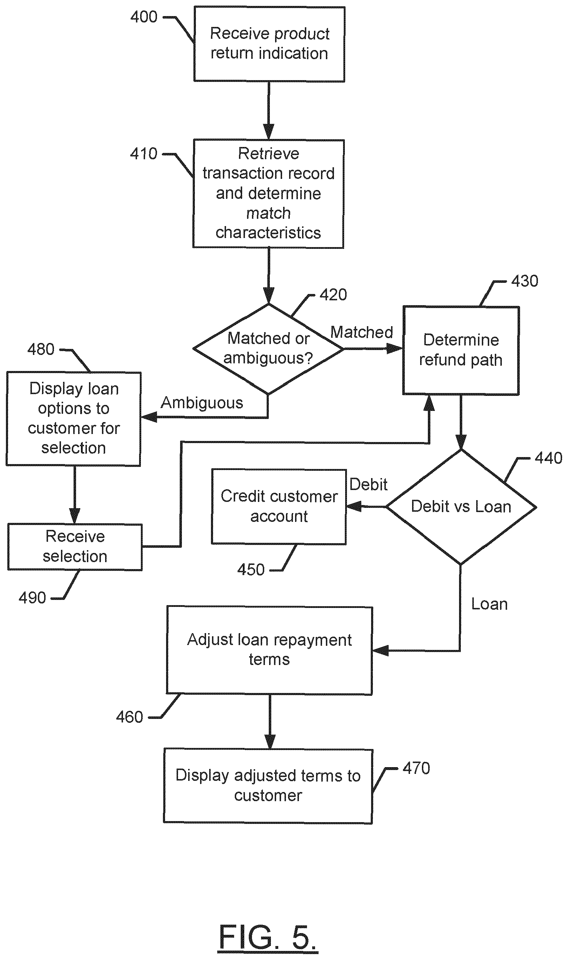

The transaction record may be stored in the memory 104 of FIG. 2 in some cases. The transaction record may include information indicating the amount of the transaction, the selected transaction type, the merchant, and the date of the transaction. However, one of skill in the art will appreciate that the transaction record may include other information as well in some cases. For example, individual products that form components or items acquired in a transaction may also be included in some cases. Transaction type may, for example, refer to whether the transaction was processed as a debit transaction (e.g., via operation 380 above) or a loan (e.g., via operation 390 above). When applicable and available, prices of the individual products may also be included. The storage of this transaction record may be useful, for example, in connection with processing product returns and the refunds associated therewith. FIG. 5 describes a scenario in which such a product return occurs.

Turning to FIG. 5, a product return indication may initially be received at operation 400. As noted above, the product return indication may, in some cases, be provided by the customer. In this regard, the customer may inform the facilitator that the customer has initiated a product return with the merchant and therefore the facilitator may be informed of the identity of the merchant, and perhaps also the identity of the product, the transaction details, the amount of the transaction, and/or the like. However, as an alternative, the product return indication may be the receipt of funds (i.e., the refund amount) from the merchant. In those examples, the particular transaction with which the refund amount is to be associated may not be as easily known or readily available. However, the refund management module 170 may be configured to attempt to determine this information by reviewing transaction records as described herein.

In either of the scenarios described above, at operation 410, the refund management module 170 may retrieve transaction record information to attempt to determine match characteristics. Operation 410 may, in some cases, occur when the refund amount is received regardless of whether the customer provided the product return indication. In this regard, even if the customer provides the product return indication, there may be no need for the facilitation agent 44 to perform any other activities until the refund amount is actually received. In the first scenario discussed above (i.e., where the customer provides the product return indication), the information provided by the customer may be used when provided, or responsive to the receipt of the refund amount to retrieve the corresponding transaction record at operation 410. Thus, the receipt of the refund amount may not necessarily be the trigger for operation 410 in such examples. However, when the refund amount is received without prior notice from the customer, the receipt of the refund amount may trigger operation 410.

When the transaction record is retrieved, a determination may be made as to whether the refund amount can be matched to a prior transaction, or whether it is ambiguous as to which transaction the refund amount is associated with at operation 420. Thus, for example, when the refund amount is received, the refund amount received from the merchant may be checked against any prior transactions with that merchant (or at least transactions within a predetermined period of time prior to the receipt of the refund amount). If the amount of the transaction and the merchant for a given transaction match the actually received refund amount from the merchant, then the corresponding transaction and refund may be considered to be matched. If there is no amount of any transaction that match the actually received refund amount (or multiple transactions with matching amounts), then the corresponding refund may not be matched, and may be ambiguous.

In some cases, a transaction could be considered to be matched even if there is not an exact match between refund amount and transaction amount. For example, for certain merchants, or for certain other special cases that may be defined, as long as the refund amount is less than the transaction amount, and therefore could "fit" into that transaction, a match may be programmed as an outcome. In such cases, in addition to the refund amount being less than the transaction amount, there may be a ratio or percentage requirement (e.g., the refund amount is between 80% and 99% of the transaction amount) that may be employed. Regardless of the specific requirement, such requirement may be programmed into the operation of the refund management module 170.

If matched at operation 420, process may flow to operation 430 where a refund path is determined. The refund path may depend, at least in part, on whether the transaction that matched was conducted as a debit or loan transaction as determined at operation 440. In this regard, the transaction record further stores information on the transaction type, which provides this information. If the transaction that matched was a debit transaction, the customer's bank account or linked account may be credited with the refund amount at operation 450. However, if the transaction that matched was a loan transaction, then an adjustment may be made to the loan repayment terms at operation 460, and such adjusted terms may be presented to the customer at operation 470. Details of the adjustment will be described in greater detail below.

Meanwhile, if the matching effort at operation 420 fails, the refund management module 170 may provide instructions for the display of a unique interface at the customer device in order to show every reasonable or possible option for association with the received refund amount to the client at operation 480 to enable the client to make a selection regarding how to manage the refund. When the selection is received from the customer at operation 490, the information received may then be used to route flow back to operation 430 to determine the refund path.

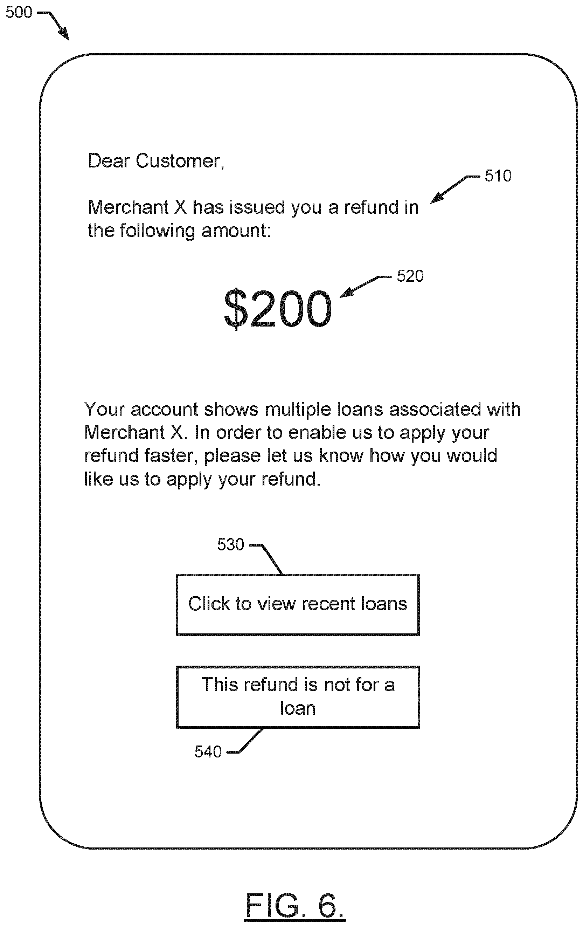

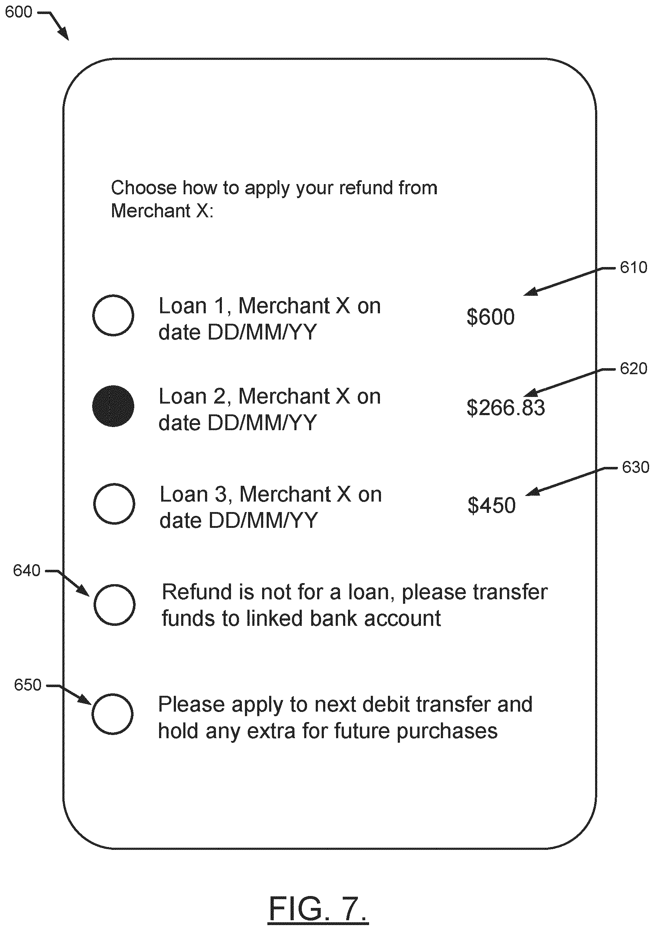

The presentation of options to the customer (e.g., via client 20) may take a number of different forms. However, FIGS. 6 and 7 illustrates examples of a specific user interface that may be needed in order to provide information needed to carry out the technical aspects of the operation. In this regard, as shown in FIG. 6, a customer selection screen 500 may be provided indicating that a refund has been received in a given amount to request customer instructions. The customer selection screen 500 may therefore include a merchant identification section 510 and a refund amount indication section 520. The customer selection screen 500 may also enable the customer to specifically link to a listing of recent loan activity associated with the merchant identified by the merchant identification section 510 (i.e., the identified merchant) by selecting a loan review selector 530. The customer may alternatively select an alternative selector 540 to indicate that the refund is not for a loan. The alternative selector 540 may link to other options for handling the refund amount received, or may link to debit transactions with the identified merchant. In some cases, debit and loan transactions with the merchant may both be provided in the same list.

FIG. 7 shows a listing of loans 600 with the identified merchant for customer selection in accordance with an example embodiment. In this regard, the listing of loans 600 includes a first loan 610, a second loan 620, and a third loan 630. Each loan has its own corresponding information (e.g., from the transaction record) indicating the loan amount and the date of the transaction or loan origination. The listing of loans 600 may also include an alternative handling option (or options) in case the customer desires alternative handling. In this regard, transfer link 640 may indicate that the refund is not for a loan and should instead be transferred to the linked back account (e.g., since the refund was for a debit transaction). However, the refund could be for a loan, but the customer may desire to keep the loan anyway instead of canceling it, which the alternative handling options may also facilitate. As another option, a hold funds option 650 may be provided to indicate that the facilitator should hold the funds in association with the customer's account with the facilitator, so that the funds can be applied to a next debit transfer. In such case, the funds (or any extra amount thereof after the next debit transfer) may be held against future purchases. In some cases, a combination of operations 640 and 650 may also be employed.

Operation 450, when conducted, may typically be straightforward, if applied to the customer's bank account or linked account where funds will quite simply be deposited matching the refund amount received. However, if the credit is (as it may be in some cases) to an account of the customer with the facilitator, the amount credited may modify the amount of additional credit the customer may immediately have access to (e.g., in a pre-approved capacity). In such cases, operation 450 may be accompanied by a corresponding notification or message issued to the customer to inform the customer of the modification to the approved or pre-approved credit limit of the customer.

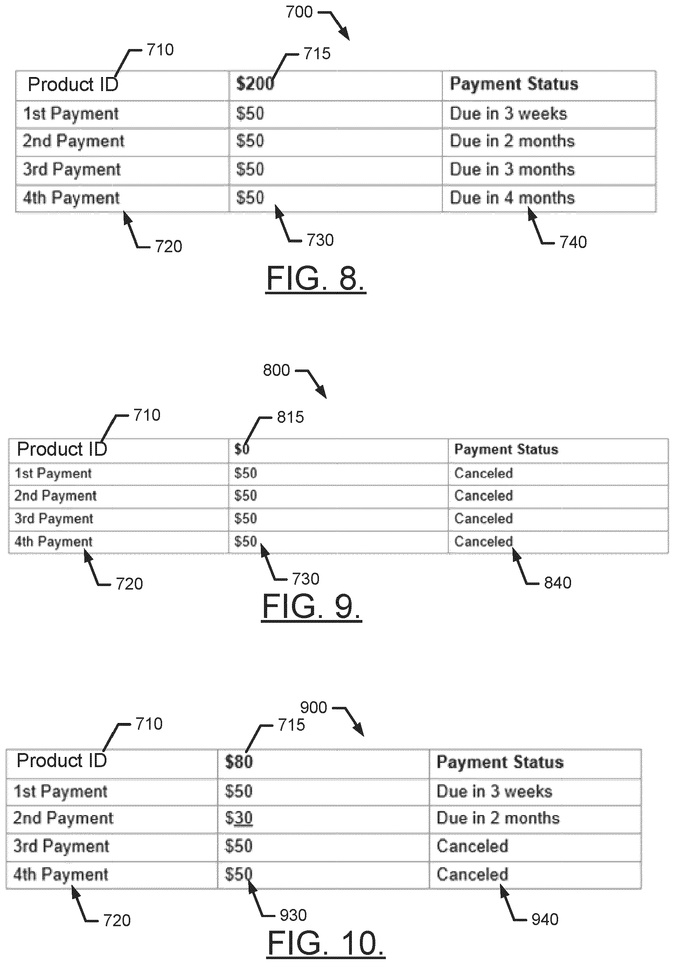

Operation 460 may also take a number of different detailed routes dependent upon the particular scenario involved. Moreover, the same can be said of routing that passes through operation 480 when a match cannot be made. Several such scenarios will now be described in reference to FIGS. 8-15.

Turning first to FIG. 8, a customer payment schedule 700 (or repayment schedule) is shown illustrating a product identifier 710 for the product associated with a $200 transaction, which was financed with a loan at the time the transaction was conducted (resulting in a $200 loan amount). Thus, for example, the customer payment schedule 700 is an example of one possible output at operation 390 of the process shown in FIG. 4. The remaining loan repayment amount 715 of $200 is listed since no payment has yet been made. The customer payment schedule 700 shows a listing of payments 720 that are to be made to pay off the loan, and a listing of each payment amount 730. Finally, the customer payment schedule 700 includes a listing of due dates 740 showing when each payment is expected to be made. If no product return is made, the customer would be expected to make the listed payment amounts on the corresponding due dates to pay off the loan.

However, if the customer returns the product to the merchant, and the merchant issues a full refund, then the process outlined in FIG. 5 above may be followed and since a loan was involved, if a match at operation 420 is assumed, then flow through operation 460 would result in a need to display adjusted loan terms to the customer at operation 470. FIG. 9 illustrates an example of such adjusted loan terms that may be displayed at operation 470 for a scenario when the refund amount is equal to the amount of the transaction (or full amount of the transaction) and no payment has yet been made. In this regard, FIG. 9 illustrates an updated or adjusted payment schedule 800 with corresponding adjustments made to the customer payment schedule 700 of FIG. 8. In particular, the change notable is that since the refund amount ($200) was equal to the remaining loan repayment amount 715 of $200 from FIG. 8, the application of the refund amount (of $200) results in a $0 remaining loan repayment amount 815 in the adjusted payment schedule 800 of FIG. 9. Additionally, the listing of due dates 840 has been updated to reflect that all payments that were previously scheduled are canceled.

Notably, although one might assume that the refund amount ($200) is received in a single event as a refund for the full amount, the adjusted payment schedule 800 of FIG. 9 would also apply to a scenario in which multiple partial refunds were received that added up to the same amount (i.e., the full amount of the transaction). This is true anytime the partial refunds are received before a next payment is made by the customer. Thus, for example, if a first partial refund of $100 is received, and then a second and third partial refund of $50 each is received within a day or two (or at least before the first payment is due), then the net refund will be $200 and the adjusted payment schedule 800 of FIG. 9 would again apply.

FIG. 10 illustrates a slightly more complicated scenario starting from the same original place (i.e., FIG. 8). However, in the scenario of FIG. 10, a partial refund of only $120 was received by the facilitator from the merchant. Application of the $120 refund results in a remaining loan repayment amount 915 of only $80. The $120 received is then applied to the payments at the end of the listing of due dates (i.e., so the loan is paid off earlier). As a result, the last two payments in the listing of due dates 940 of the adjusted payment schedule 900 of FIG. 10 are canceled. The listing of each payment amount 930 is also updated to indicate that the second payment is now $30 instead of the previously planned payment of $50.

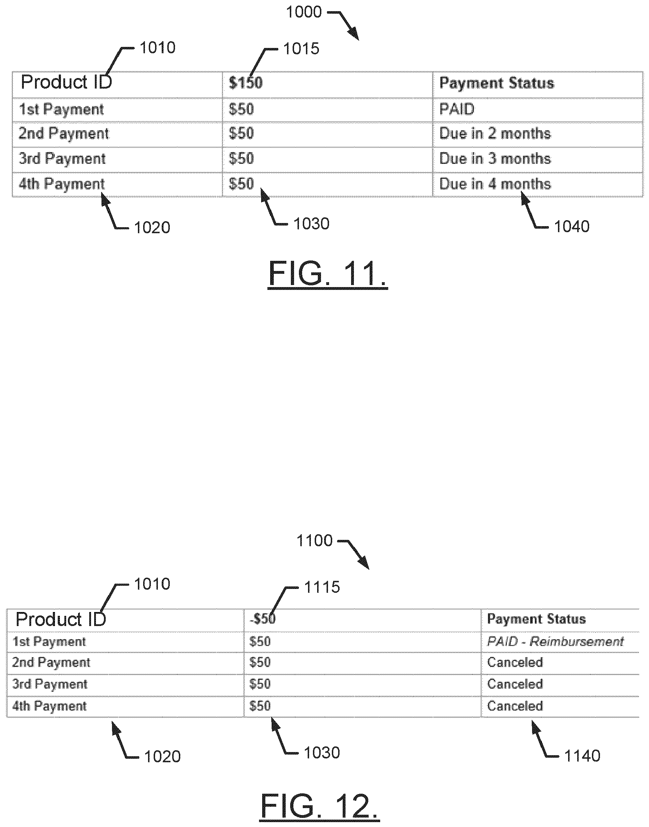

FIG. 11 corresponds to another and different scenario in which at least one payment is received before the refund amount is received (and perhaps therefore also before the product return). Thus, FIG. 11 illustrates a customer payment schedule 1000 (or repayment schedule) for return of a product identifier 1010 for the product associated with a $200 transaction, after a payment is made. In this regard, the first payment of $50 has been made. Thus, for example, the customer payment schedule 1000 is an example of another possible output at operation 390 of the process shown in FIG. 4.

The remaining loan repayment amount 1015 of $150 is listed since one payment of $50 has been received. The customer payment schedule 1000 shows a listing of payments 1020 that are to be made to pay off the loan, and a listing of each payment amount 1030. Finally, the customer payment schedule 1000 includes a listing of due dates 1040 showing when each payment is expected to be made. If no product return is made, the customer would be expected to make the listed payment amounts on the corresponding due dates to pay off the loan after the second, third and fourth payments have been made.

FIG. 12 illustrates an updated payment schedule 1100, which may be applicable if the customer returns the product to the merchant, and the merchant issues a full refund after an initial payment has already been made. Thus, FIG. 12 represents an outcome of the process outlined in FIG. 5 above, if a match at operation 420 is assumed, and flow through operation 460 resulted in a need to display adjusted loan terms to the customer at operation 470. FIG. 12 illustrates an example of such adjusted loan terms that may be displayed at operation 470 for a scenario when the refund amount is equal to the amount of the transaction (or full amount of the transaction) and one payment has been made. In this regard, FIG. 12 illustrates the adjusted payment schedule 1100 with corresponding adjustments made to the customer payment schedule 1000 of FIG. 11. In particular, the change notable is that since the refund amount ($200) was greater than the remaining loan repayment amount 1015 of $150 from FIG. 11, the application of the refund amount (of $200) results in a -$50 remaining loan repayment amount 1115 in the adjusted payment schedule 1100 of FIG. 12. The negative value represented here means that the facilitator must credit the customer (or owes the customer) an additional $50. Additionally, the listing of due dates 1140 has been updated to reflect that all remaining payments that were previously scheduled (i.e., the second, third, and fourth payments) are canceled.

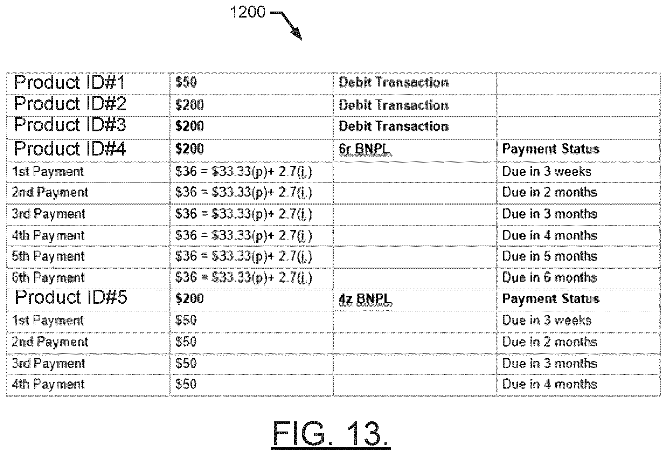

FIG. 13 illustrates a still different scenario in which five separate product purchases are made using the value card, where two of the purchases were financed, and three of the purchases were debit purchases. FIG. 13 illustrates a transaction listing 1200 showing all such transactions, and the payment schedule associated with the financed transactions. In this regard, a first product (with product ID#1) was purchased in a $50 debit transaction, a second product (with product ID#2) was purchased in a $200 debit transaction, and a third product (with product ID#3) was purchased in another $200 debit transaction. These debit transactions are accompanied by a $200 loan for a fourth product (with product ID#4) that was financed with an installment loan having six payments with principle and interest paid in connection with each payment. A formula for determining a $36 payment for each of the six payments is shown as an example in FIG. 13, and the repayment schedule is also shown in the transaction listing 1200. FIG. 13 also shows a fifth product (with product ID#5) that was financed in a $200 transaction with an installment loan having four payments with no interest. The four payments are each $50 as shown in the example of FIG. 13, and the repayment schedule is also shown in the transaction listing 1200.

With this starting point, if it is assumed that product returns from some or all of these products begin to occur, a number of considerations may come to mind. First, if all of the products are returned, and a full refund is received, then the refund would be expected to be for $850 and a match could be achieved, resulting in $450 being credited to the customer's linked account, and both loans being canceled. However, if only a partial refund is received (e.g., a $300 refund), then a match may not be achievable at operation 420 of FIG. 5 and flow may proceed through operation 480 to request a selection from the customer as to how to apply the refund amount. Notably, this is the same whether the refund is received in one single $300 amount, or in multiple partial amounts that add up to $300 within a short period of time (and before any next payment is received).

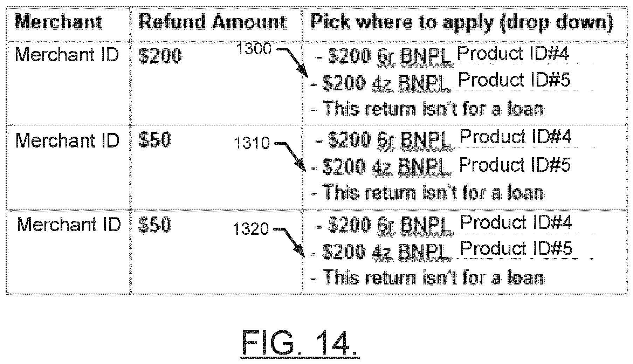

In such an example involving a $300 refund amount (whether consisting of a single or multiple partial refund payments), the customer may, for example, see interface screens similar to those shown in FIGS. 6 and 7 above, but with amounts and options corresponding to those shown in FIG. 13. If it is assumed that the $300 refund is received in three separate events corresponding to a $200 refund, and two $50 refunds, FIG. 14 shows potential selection options that may be provided to the customer in one example. In this regard, for the $200 refund, a match cannot be made because there are two $200 transactions. Thus, the customer may be provided with selection options 1300 to apply the refund to either the loan for product ID#4, or the loan for product ID#5, or indicate that the refund is not for one of the loans (e.g., instead being for one of the debit transactions). For each of the $50 refunds, again there is no match with respect to any loan. Thus, the customer may be provided with selection options 1310 and 1320, respectively, to apply the refund to either the loan for product ID#4, or the loan for product ID#5, or indicate that the refund is not for one of the loans (e.g., instead being for one of the debit transactions).

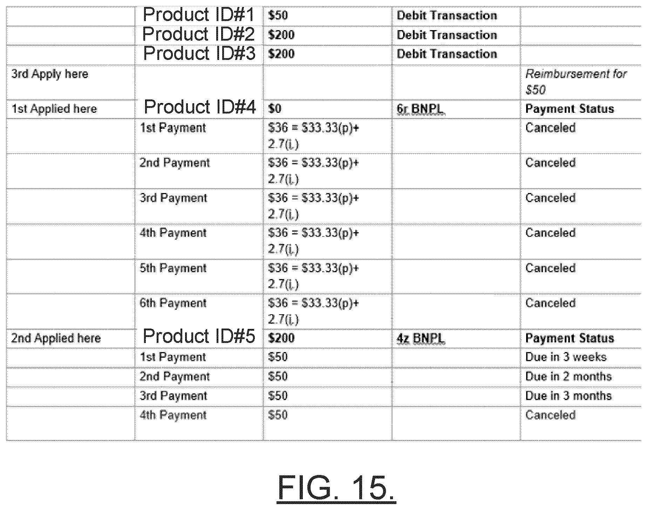

If it is assumed that the client has selected to apply the $200 refund to the loan for product ID#4, has selected to apply the first $50 refund to the loan for product ID#5, and has indicated that the second $50 refund is not for a loan, then the transaction listing 1200 of FIG. 13 may be updated as shown in FIG. 15. In this regard, the transaction listing 1400 of FIG. 15 shows that the loan for product ID #4 is fully canceled. Meanwhile, only the last $50 payment for the loan for product ID#5 is canceled, and the other (earlier) payments will continue to be owed as originally planned. Finally, the third $50 refund is reimbursed to the customer (e.g., via transfer to the linked account, or holding for application to a next debit transaction).

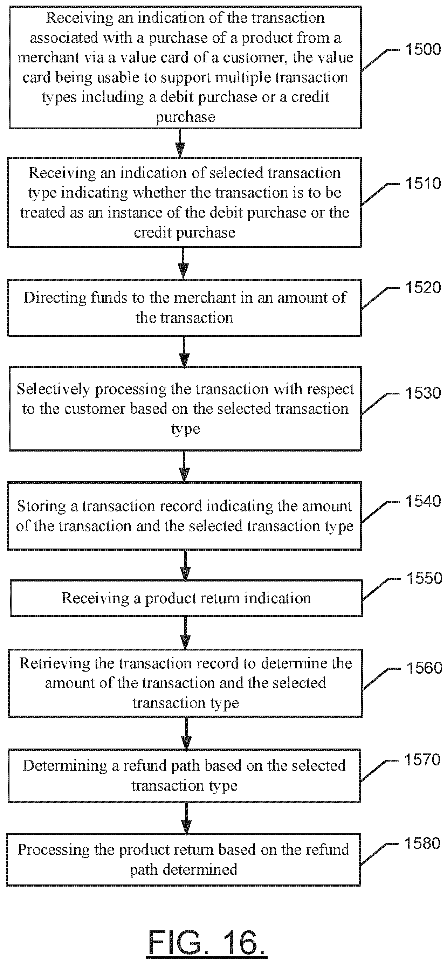

From a technical perspective, the SFP platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 16 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of processing a customer transaction according to one embodiment of the invention is shown in FIG. 16. The method may include receiving an indication of the transaction associated with a purchase of a product from a merchant via a value card of a customer, where the value card is usable to support multiple transaction types including a debit purchase or a credit purchase at operation 1500, and receiving an indication of selected transaction type indicating whether the transaction is to be treated as an instance of the debit purchase or the credit purchase at operation 1510. The method may further include directing funds to the merchant in an amount of the transaction at operation 1520, selectively processing the transaction with respect to the customer based on the selected transaction type at operation 1530, and storing a transaction record indicating the amount of the transaction and the selected transaction type at operation 1540. The method may further include receiving a product return indication at operation 1550, retrieving the transaction record to determine the amount of the transaction and the selected transaction type at operation 1560, determining a refund path based on the selected transaction type at operation 1570, and processing the product return based on the refund path determined at operation 1580.

In an example embodiment, an apparatus for performing the method of FIG. 16 above may comprise a processor (e.g., the processor 102) or processing circuitry configured to perform some or each of the operations (1500-1580) described above. The processor may, for example, be configured to perform the operations (1500-1580) by performing hardware implemented logical functions, executing stored instructions, or executing algorithms for performing each of the operations. In some embodiments, the processor or processing circuitry may be further configured for additional operations or optional modifications to operations 1500 to 1580.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, selectively processing the transaction may include, in response to the transaction being treated as the instance of the debit purchase, arranging to withdraw funds in the amount of the transaction from an associated debit account of the customer, and, in response to the transaction being treated as the instance of the credit purchase, establishing a loan for the customer and provide loan repayment information to the customer. In an example embodiment, the refund path may include crediting the associated debit account of the customer from which the debit purchase is funded in response to the transaction being treated as the instance of the debit purchase, and adjusting loan repayment terms in response to the transaction being treated as the instance of the credit purchase. In some cases, adjusting loan repayment terms may include canceling the loan in response to the product return indication providing a merchant match and a refund amount match indicating receipt of a full refund from the merchant for the amount of the transaction. In an example embodiment, adjusting loan repayment terms may include modifying a number and/or amount of payments to be made on the loan in response to the product return indication providing a merchant match and a refund amount non-match indicating receipt of a partial refund from the merchant relative to the amount of the transaction. In some cases, the product may be one of a plurality of products financed via the loan, and adjusting loan repayment terms may include modifying a number and/or amount of payments to be made on the loan in response to the product return indication providing a merchant match based on subtracting a refund amount received from each latest dated payment in a series of scheduled payments until the refund amount is exhausted. In an example embodiment, adjusting loan repayment terms may include determining a remaining loan amount responsive to receipt of one or more loan payments prior to receiving the product return indication, canceling the loan in response to the product return indication providing a merchant match and a refund amount match indicating receipt of a full refund from the merchant for the amount of the transaction, and transferring a difference amount of an amount of the full refund minus the remaining loan amount to the customer. In some cases, the method may further include generating instruction for display of adjusted loan repayment terms at a communication device of the customer. In an example embodiment, in response to retrieval of the transaction record failing to indicate a merchant match and a refund amount match, determining the refund path further may include generating instructions for display of a list of potential loans to which the refund amount is capable of being applied at a communication device of the customer and applying the refund amount to a selected loan from the list of potential loans responsive to a selection made by the customer at the communication device of the customer In some cases, in response to retrieval of the transaction record failing to indicate a merchant match and a refund amount match, determining the refund path further includes generating instructions for display of a list of potential loans to which the refund amount is capable of being applied at a communication device of the customer, and adjusting loan repayment terms may include determining a remaining loan amount for a selected loan from the list of potential loans and modifying a number and/or amount of payments to be made on the selected loan.

Example embodiments therefore provide technical tools for automatic handling of refund receipts in some cases, in a way that allows the refund to be applied to the correct transaction (i.e., the transaction associated with the product purchase for the same product that was returned) without any user interaction. Where such automatic handling is not possible (due to ambiguity), example embodiments engage via technical tools with the customer to get guidance as to how to handle the refund. The handling may be applicable to full refunds and partial, before or after payments have been made, and may include the transfer of excess funds to a linked customer account, to a hold against future debit purchases made by the customer, and/or to the increasing of the credit limit or pre-approved loan approval amount that is offered to the customer.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for processing a transaction including a product return, the method comprising:
receiving an indication of the transaction associated with a purchase of a product from a merchant via a value card of a customer, the value card being usable to support multiple transaction types including a debit purchase or a credit purchase;
receiving an indication of selected transaction type indicating whether the transaction is to be treated as an instance of the debit purchase or the credit purchase;
directing funds to the merchant in an amount of the transaction;
selectively processing the transaction with respect to the customer based on the selected transaction type;
storing a transaction record indicating the amount of the transaction and the selected transaction type;
receiving a product return indication;
retrieving the transaction record to determine the amount of the transaction and the selected transaction type;
determining a refund path based on the selected transaction type; and
processing the product return based on the refund path determined.

2. The method of claim 1, wherein selectively processing the transaction comprises:
in response to the transaction being treated as the instance of the debit purchase, arranging to withdraw funds in the amount of the transaction from an associated debit account of the customer, and
in response to the transaction being treated as the instance of the credit purchase, establishing a loan for the customer and provide loan repayment information to the customer.

3. The method of claim 2, wherein the refund path comprises crediting the associated debit account of the customer from which the debit purchase is funded in response to the transaction being treated as the instance of the debit purchase, and
adjusting loan repayment terms in response to the transaction being treated as the instance of the credit purchase.

4. The method of claim 3, wherein adjusting loan repayment terms comprises canceling the loan in response to the product return indication providing a merchant match and a refund amount match indicating receipt of a full refund from the merchant for the amount of the transaction.

5. The method of claim 3, wherein adjusting loan repayment terms comprises modifying a number and/or amount of payments to be made on the loan in response to the product return indication providing a merchant match and a refund amount non-match indicating receipt of a partial refund from the merchant relative to the amount of the transaction.

6. The method of claim 3, wherein the product is one of a plurality of products financed via the loan, and
wherein adjusting loan repayment terms comprises modifying a number and/or amount of payments to be made on the loan in response to the product return indication providing a merchant match based on subtracting a refund amount received from each latest dated payment in a series of scheduled payments until the refund amount is exhausted.

7. The method of claim 3, wherein adjusting loan repayment terms comprises determining a remaining loan amount responsive to receipt of one or more loan payments prior to receiving the product return indication, canceling the loan in response to the product return indication providing a merchant match and a refund amount match indicating receipt of a full refund from the merchant for the amount of the transaction, and transferring a difference amount of an amount of the full refund minus the remaining loan amount to the customer.

8. The method of claim 3, further comprising generating instruction for display of adjusted loan repayment terms at a communication device of the customer.

9. The method of claim 3, wherein, in response to retrieval of the transaction record failing to indicate a merchant match and a refund amount match, determining the refund path further comprises generating instructions for display of a list of potential loans to which the refund amount is capable of being applied at a communication device of the customer and applying the refund amount to a selected loan from the list of potential loans responsive to a selection made by the customer at the communication device of the customer.

10. The method of claim 3, wherein, in response to retrieval of the transaction record failing to indicate a merchant match and a refund amount match, determining the refund path further comprises generating instructions for display of a list of potential loans to which the refund amount is capable of being applied at a communication device of the customer, and
wherein adjusting loan repayment terms comprises determining a remaining loan amount for a selected loan from the list of potential loans and modifying a number and/or amount of payments to be made on the selected loan.

11. An apparatus for processing a transaction including a product return, the apparatus comprising processing circuitry configured to perform the method of any of claims 1-10.
